# EUROPEAN PATENT SPECIFICATION

(11) **EP 3 955 455 B1**
(45) Date of publication and mention of the grant of the patent: **20.03.2024**
(21) Application number: 19924416.1
(22) Date of filing: 11.04.2019
(51) Int. Cl.: H02P 25/04, H02P 1/46, H02K 1/14, H02K 1/278, H02K 7/14, H02K 11/33, H02P 6/22, H02P 6/26

(54) **MOTOR DRIVE DEVICE**
MOTORANTRIEBSVORRICHTUNG
DISPOSITIF D'ENTRAÎNEMENT DE MOTEUR

(43) Date of publication of application: 16.02.2022
(73) Proprietor: MITSUBISHI ELECTRIC CORPORATION, Chiyoda-ku Tokyo 100-8310 (JP)
(72) Inventor: TAKAYAMA, Yuji, Tokyo 100-8310 (JP); MATSUO, Haruka, Tokyo 100-8310 (JP); HATAKEYAMA, Kazunori, Tokyo 100-8310 (JP); TSUCHIDA, Kazuchika, Tokyo 100-8310 (JP)
(74) Representative: Mewburn Ellis LLP
(86) International application number: PCT/JP2019/015852
(87) International publication number: WO 2020/208786

(56) References cited:
- EP-A2- 3 222 853
- WO-A1-2017/077599
- DE-A1-102005 011 731
- JP-A- S5 281 512
- JP-A- S60 134 783
- JP-A- 2013 188 135
- JP-A- 2017 189 093

## Description

### Field

The present invention relates to a motor driving apparatus for driving a single-phase motor.

### Background

There is a conventional method of position sensorless startup of a multi-phase brushless motor in which a high frequency voltage is applied such that the motor rotates following the rotating magnetic field generated by the inverter. In addition, Patent Literature 1 below discloses a startup method for a three-phase sensorless brushless motor in which the initial position of the rotor is set through one energization, the rotation speed of the rotor is increased based on the set initial position, and the position of the rotor is detected after the rotation speed is increased.

### Citation List

### Patent Literature

Patent Literature 1: Japanese Patent Application Laid-open No. H1-308192

JP S60 134783 A (MITSUBISHI ELECTRIC CORP) 18 July 1985 (1985-07-18) discloses an inverter to reduce the output current capacity of an inverter by temporarily stopping the start when the rotating direction that a starting torque increase is detected, switching to a rotating direction that the torque decreases, and restarting.

EP 3 222 853 A2 (WHIRLPOOL CO [US]) 27 September 2017 (2017-09-27) discloses a drain pump for an appliance including a single, self-starting, single-phase synchronous motor and a pump chamber having an inlet and first and second outlets.

DE 10 2005 011731 A1 (AWECO APPLIANCE SYS GMBH & CO [DE]) 20 July 2006 (2006-07-20) discloses a single phase synchronous motor for use in pump of e.g. dishwasher, has activation device for starting motor with defined rotating direction such as left and/or right, and formed in such a manner that defined direction is selectable.

### Summary

### Technical Problem

As described above, various startup methods have been proposed for multi-phase motors. However, in the case of single-phase motors, it is not possible to generate a rotating magnetic field using an inverter. Therefore, it is difficult to determine the position of the rotor by applying a high frequency voltage. Thus, in the case of position sensorless startup of a single-phase motor, stable startup is difficult, which is problematic.

The present invention has been made in view of the above, and an object thereof is to obtain a motor driving apparatus capable of activating a single-phase motor stably even in the case of position sensorless startup of the single-phase motor.

### Solution to Problem

The present invention is defined in the independent claim 1.

### Advantageous Effects of Invention

The motor driving apparatus according to the present invention can achieve the effect of activating the single-phase motor stably even in the case of position sensorless startup of the single-phase motor.

### Brief Description of Drawings

FIG. 1 is a block diagram illustrating the configuration of a motor driving system including a motor driving apparatus according to an embodiment.
FIG. 2 is a cross-sectional view for explaining the structure of a single-phase motor according to the embodiment.
FIG. 3 is a diagram illustrating changes in rotor position in the case that the single-phase motor illustrated in FIG. 2 is excited.
FIG. 4 is a diagram illustrating torque characteristics of the single-phase motor illustrated in FIG. 2.
FIG. 5 is a circuit diagram illustrating the inverter illustrated in FIG. 1.
FIG. 6 is a circuit diagram illustrating a modification of the inverter illustrated in FIG. 5.
FIG. 7 is a block diagram illustrating a functional part that generates pulse width modulation (PWM) signals among the functional parts of the control unit illustrated in FIG. 1.
FIG. 8 is a block diagram illustrating an example of the carrier comparison unit illustrated in FIG. 7.
FIG. 9 is a time chart illustrating examples of the main waveforms in the case that the carrier comparison unit illustrated in FIG. 8 is used for operation.
FIG. 10 is a block diagram illustrating another example of the carrier comparison unit illustrated in FIG. 7.
FIG. 11 is a time chart illustrating examples of the main waveforms in the case that the carrier comparison unit illustrated in FIG. 10 is used for operation.
FIG. 12 is a time chart, different from that in FIG. 9, illustrating examples of the main waveforms in the case that the carrier comparison unit illustrated in FIG. 8 is used for operation.
FIG. 13 is a first diagram for explaining startup control according to the embodiment.
FIG. 14 is a second diagram for explaining startup control according to the embodiment.
FIG. 15 is a time chart for explaining current detection timings according to the embodiment.
FIG. 16 is a diagram illustrating the configuration of a vacuum cleaner including a motor driving apparatus according to the embodiment.
FIG. 17 is a diagram illustrating the configuration of a hand dryer including a motor driving apparatus according to the embodiment.

### Description of Embodiments

Hereinafter, a motor driving apparatus, an electric blower, a vacuum cleaner, and a hand dryer according to embodiments of the present invention will be described in detail with reference to the drawings. The present invention is not limited to the following embodiments.

### Embodiment.

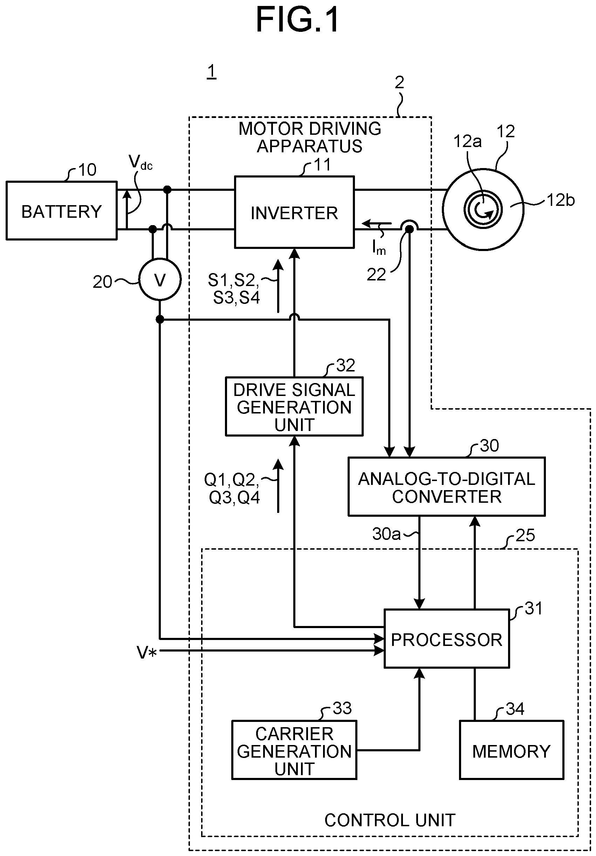

FIG. 1 is a block diagram illustrating the configuration of a motor driving system 1 including a motor driving apparatus 2 according to an embodiment. The motor driving system 1 illustrated in FIG. 1 includes a single-phase motor 12, the motor driving apparatus 2, and a battery 10. The motor driving apparatus 2 is a driving apparatus that supplies alternating-current power to the single-phase motor 12 to drive the single-phase motor 12. The battery 10 is a direct-current power supply that supplies direct-current power to the motor driving apparatus 2.

The motor driving system 1 includes a voltage sensor 20 and a current sensor 22. The motor driving system 1 is what is called a position sensorless driving system, in which position sensor signals for detecting the rotational position of a rotor 12a are not used.

The motor driving apparatus 2 includes an inverter 11, an analog-to-digital converter 30, a control unit 25, and a drive signal generation unit 32.

The voltage sensor 20 is a sensor that detects a direct-current voltage V_{dc} output from the battery 10 to the motor driving apparatus 2. The direct-current voltage V_{dc} is the output voltage of the battery 10 and is the applied voltage to the inverter 11.

The current sensor 22 is a sensor that detects a motor current Iₘ. The motor current Iₘ is an alternating current supplied from the inverter 11 to the single-phase motor 12. The motor current Iₘ is equal to the alternating current flowing in the winding (not illustrated in FIG. 1) wound around a stator 12b of the single-phase motor 12. The current sensor 22 can be exemplified by a current detector that detects a current using a current transformer (CT) or a shunt resistor.

The single-phase motor 12 is used as a rotary electric machine for rotating an electric blower (not illustrated). The electric blower is installed on devices such as vacuum cleaners and hand dryers.

In the present embodiment, the voltage sensor 20 detects the direct-current voltage V_{dc}, but the present invention is not limited to this. The detection target of the voltage sensor 20 may be inverter output voltage, i.e. output voltage of the motor driving apparatus 2. Note that the inverter output voltage is equal to the alternating-current voltage output from the inverter 11 to the single-phase motor 12. In addition, the inverter output voltage is synonymous with the motor applied voltage described later.

The inverter 11 is a power converter that converts the direct-current voltage V_{dc} applied from the battery 10 into an alternating-current voltage. The inverter 11 is connected to the single-phase motor 12, and supplies alternating-current power to the single-phase motor 12 by applying the alternating-current voltage obtained through conversion to the single-phase motor 12.

The analog-to-digital converter 30 is a signal converter that converts analog data into digital data. The analog-to-digital converter 30 converts the detected value of the direct-current voltage V_{dc} detected by the voltage sensor 20 into digital data and outputs the digital data to the control unit 25. In addition, the analog-to-digital converter 30 converts the detected value of the motor current Iₘ detected by the current sensor 22 into digital data and outputs the digital data to the control unit 25.

The control unit 25 generates PWM signals Q1, Q2, Q3, and Q4 (hereinafter denoted by "Q1 to Q4" as appropriate) based on a digital output value 30a obtained through conversion in the analog-to-digital converter 30 and a voltage amplitude command V*. The voltage amplitude command V* will be described later.

The drive signal generation unit 32 generates drive signals S1, S2, S3, and S4 (hereinafter denoted by "S1 to S4" as appropriate) for driving the switching elements in the inverter 11 based on the PWM signals Q1 to Q4 output from the control unit 25.

The control unit 25 includes a processor 31, a carrier generation unit 33, and a memory 34. The processor 31 generates the PWM signals Q1 to Q4 for performing PWM control. The processor 31 is a processing unit that performs various computations related to PWM control and lead angle control. The processor 31 can be exemplified by a central processing unit (CPU), a microprocessor, a microcontroller, a microcomputer, a digital signal processor (DSP), or a system large scale integration (LSI).

The memory 34 stores a program that is read by the processor 31. The memory 34 is also used as a work area when the processor 31 performs computation processing. The memory 34 is typically a non-volatile or volatile semiconductor memory such as a random access memory (RAM), a flash memory, an erasable programmable ROM (EPROM), or an electrically EPROM (EEPROM, registered trademark). Details of the configuration of the carrier generation unit 33 will be described later.

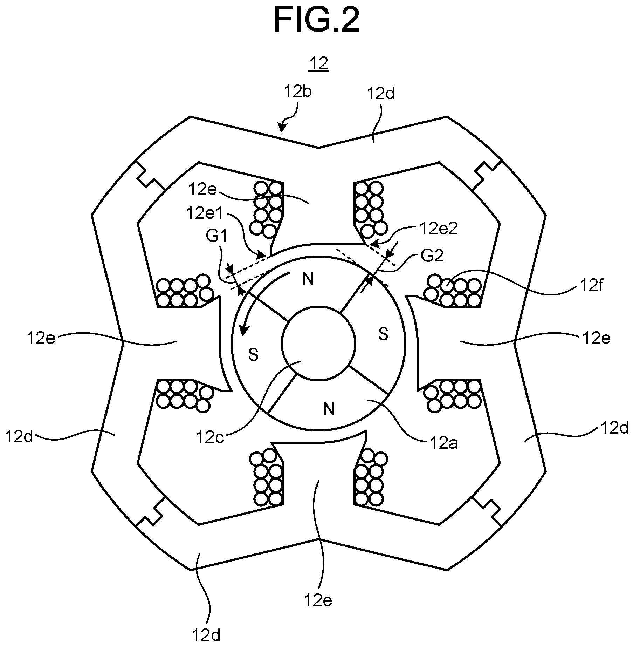

FIG. 2 is a cross-sectional view for explaining the structure of the single-phase motor 12 according to the embodiment. FIG. 2 depicts the cross-sectional shape of the rotor 12a and the stator 12b of a single-phase permanent magnet brushless motor as an example of the single-phase motor 12 used in the embodiment.

The rotor 12a is fit on a shaft 12c and is configured to be rotatable in the direction of the arrow illustrated, i.e., counterclockwise. Four permanent magnets are arranged in the circumferential direction on the rotor 12a. These four permanent magnets are disposed such that the magnetizing directions are alternately reversed in the circumferential direction, and form magnetic poles on the rotor 12a. Although the number of magnetic poles of the rotor 12a is four in the present embodiment as an example, the number of magnetic poles of the rotor 12a may be other than four.

The stator 12b is disposed around the rotor 12a. The stator 12b includes four divided cores 12d connected in an annular shape.

The divided cores 12d include asymmetric teeth 12e. A winding 12f is wound around the teeth 12e. The teeth 12e each have a first end portion 12e1 and a second end portion 12e2 protruding toward the rotor 12a. With respect to the rotation direction, the first end portion 12e1 is located ahead in the rotation direction, and the second end portion 12e2 is located behind in the rotation direction. Here, the distance between the first end portion 12e1 and the rotor 12a is referred to as the "first gap" and is denoted by G1. The distance between the second end portion 12e2 and the rotor 12a is referred to as the "second gap" and is denoted by G2. There is a relationship of G1<G2 between the first gap G1 and the second gap G2.

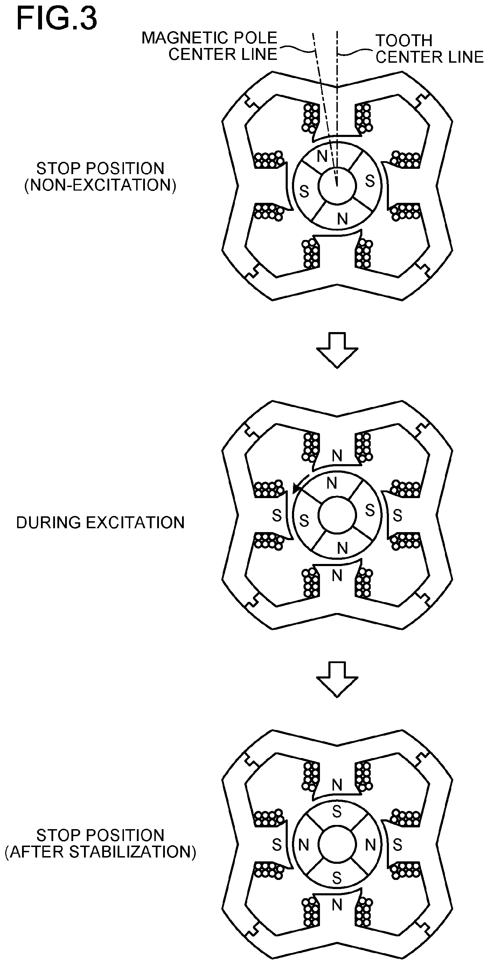

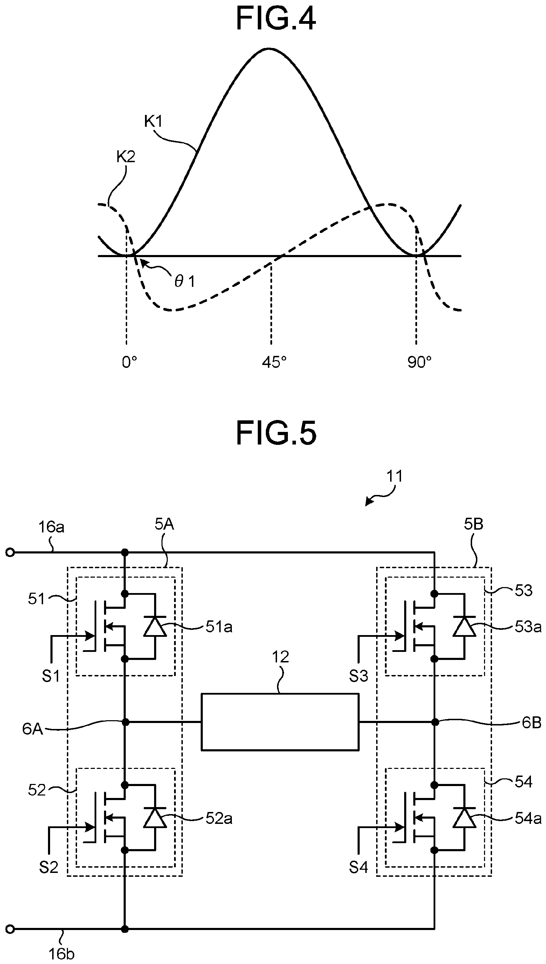

FIG. 3 is a diagram illustrating changes in rotor position in the case that the single-phase motor 12 illustrated in FIG. 2 is excited. FIG. 4 is a diagram illustrating torque characteristics of the single-phase motor illustrated in FIG. 2. The upper part of FIG. 3 depicts a stop position of the rotor 12a. At the stop position of the rotor 12a, a magnetic pole center line representing the center of a magnetic pole and a tooth center line representing the structural center are not aligned: the magnetic pole center line precedes in the rotation direction. This occurs because the single-phase motor 12 is structured to include the asymmetric teeth 12e. With this structure, the torque characteristics illustrated in FIG. 4 appear.

In FIG. 4, the curve K1 indicated by the solid line represents motor torque, and the curve K2 indicated by the broken line represents cogging torque. The motor torque is the torque generated in the rotor 12a due to the current flowing in the winding of the stator 12b. The cogging torque is the torque generated in the rotor 12a due to the magnetic force of the permanent magnets when no current is flowing in the winding of the stator 12b. Let the counterclockwise direction represent positive torque. The horizontal axis of FIG. 4 represents mechanical angle, and the stop position of the rotor 12a at which the magnetic pole center line is aligned with the tooth center line is a mechanical angle of 0°. As illustrated in FIG. 4, the cogging torque at the mechanical angle of 0° is positive. Therefore, the rotor 12a rotates counterclockwise and stops at the position of the mechanical angle θ1, where the cogging torque is zero. The position of this mechanical angle θ1 is the stop position illustrated in the upper part of FIG. 3.

In the case of the single-phase motor 12 illustrated in FIG. 2, the rotor 12a has two stop positions. One of the stop positions is the stop position illustrated in the upper part of FIG. 3 as described above, and the other is the stop position illustrated in the lower part of FIG. 3. The application of a direct-current voltage to the winding 12f causes the rotor 12a to rotate counterclockwise, and then the rotor 12a goes through the state during excitation illustrated in the middle part of FIG. 3 and stops in the state illustrated in the lower part of FIG. 3. In the case of the example of FIG. 3, because the magnetic forces generated in the teeth 12e due to the application of the direct-current voltage have the same polarity as the facing magnetic poles of the rotor 12a, torque is applied in the rotation direction and the rotor 12a rotates. Then, after a certain period of time elapses, a stable stop is achieved at the position of the lower part of FIG. 3, where the magnetic forces generated in the teeth 12e and the facing magnetic poles of the rotor 12a have different polarities.

FIG. 5 is a circuit diagram illustrating the inverter 11 illustrated in FIG. 1. The inverter 11 includes a plurality of switching elements 51, 52, 53, and 54 (hereinafter denoted by "51 to 54") that are bridge-connected.

The switching elements 51 and 52 constitute a leg 5A, which is the first leg. The leg 5A is a series circuit in which the switching element 51, which is the first switching element, and the switching element 52, which is the second switching element, are connected in series to each other.

The switching elements 53 and 54 constitute a leg 5B, which is the second leg. The leg 5B is a series circuit in which the switching element 53, which is the third switching element, and the switching element 54, which is the fourth switching element, are connected in series to each other.

The legs 5A and 5B are connected in parallel to each other between a direct-current bus 16a on the high potential side and a direct-current bus 16b on the low potential side. Thus, the legs 5A and 5B are connected in parallel to the two ends of the battery 10.

The switching elements 51 and 53 are located on the high potential side, and the switching elements 52 and 54 are located on the low potential side. Generally, in an inverter circuit, the high potential side is referred to as an "upper arm" and the low potential side is referred to as a "lower arm". Thus, the switching element 51 of the leg 5A may be referred to as the "first switching element of the upper arm", and the switching element 52 of the leg 5A may be referred to as the "second switching element of the lower arm". Similarly, the switching element 53 of the leg 5B may be referred to as the "third switching element of the upper arm", and the switching element 54 of the leg 5B may be referred to as the "fourth switching element of the lower arm".

A connection end 6A between the switching element 51 and the switching element 52 and a connection end 6B between the switching element 53 and the switching element 54 constitute an alternating-current end of the bridge circuit. The single-phase motor 12 is connected between the connection end 6A and the connection end 6B.

An example of each of the switching elements 51 to 54 is a metal-oxide-semiconductor field-effect transistor (MOSFET). A MOSFET is an example of a field-effect transistor (FET).

In the switching element 51, a body diode 51a connected in parallel between the drain and source of the switching element 51 is formed. In the switching element 52, a body diode 52a connected in parallel between the drain and source of the switching element 52 is formed. In the switching element 53, a body diode 53a connected in parallel between the drain and source of the switching element 53 is formed. In the switching element 54, a body diode 54a connected in parallel between the drain and source of the switching element 54 is formed. Each of the plurality of body diodes 51a, 52a, 53a, and 54a is a parasitic diode formed inside the MOSFET, and is used as a freewheeling diode. Note that a separate freewheeling diode may be connected. Instead of MOSFETs, insulated gate bipolar transistors (IGBTs) may be used.

The switching elements 51 to 54 are not limited to MOSFETs formed of a silicon-based material, but may be MOSFETs formed of a wide bandgap (WBG) semiconductor such as silicon carbide, gallium nitride, gallium oxide, or diamond.

In general, WBG semiconductors have higher withstand voltage and heat resistance than silicon semiconductors. Therefore, by using a WBG semiconductor for at least one of the plurality of switching elements 51 to 54, the withstand voltage property and allowable current density of the switching elements are increased, which can contribute to reducing the size of the semiconductor module incorporating the switching elements. WBG semiconductors also have high heat resistance. This can contribute to reducing the size of the heat dissipation part for dissipating heat generated by the semiconductor module. This can also contribute to simplifying the heat dissipation structure that dissipates heat generated by the semiconductor module.

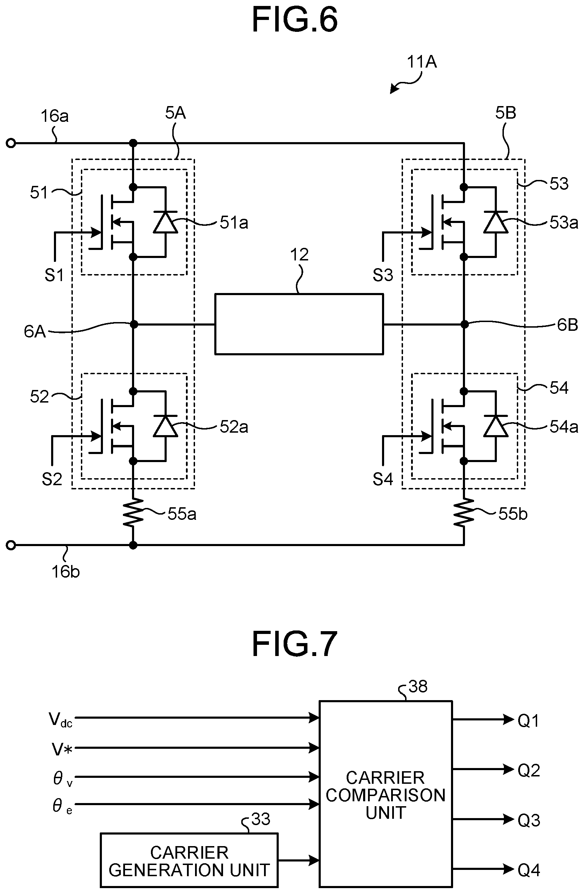

FIG. 6 is a circuit diagram illustrating a modification of the inverter 11 illustrated in FIG. 5. The inverter 11A illustrated in FIG. 6 includes shunt resistors 55a and 55b in addition to the components of the inverter 11 illustrated in FIG. 5. The shunt resistor 55a is a detector for detecting the current flowing in the leg 5A, and the shunt resistor 55b is a detector for detecting the current flowing in the leg 5B. As illustrated in FIG. 6, the shunt resistor 55a is connected between the terminal on the low potential side of the switching element 52 and the direct-current bus 16b, and the shunt resistor 55b is connected between the terminal on the low potential side of the switching element 54 and the direct-current bus 16b. In the case of using the inverter 11A including the shunt resistors 55a and 55b, the current sensor 22 illustrated in FIG. 1 can be removed. In this configuration, detected values from the shunt resistors 55a and 55b are sent to the processor 31 via the analog-to-digital converter 30. The processor 31 performs the startup control described later based on the detected values from the shunt resistors 55a and 55b.

Note that the shunt resistor 55a is not limited to that illustrated in FIG. 6 as long as it can detect the current flowing in the leg 5A. The shunt resistor 55a may be disposed between the direct-current bus 16a and the terminal on the high potential side of the switching element 51. Alternatively, the shunt resistor 55a may be disposed between the terminal on the low potential side of the switching element 51 and the connection end 6A. Alternatively, the shunt resistor 55a may be disposed between the connection end 6A and the terminal on the high potential side of the switching element 52. Similarly, the shunt resistor 55b may be disposed between the direct-current bus 16a and the terminal on the high potential side of the switching element 53. Alternatively, the shunt resistor 55b may be disposed between the terminal on the low potential side of the switching element 53 and the connection end 6B. Alternatively, the shunt resistor 55b may be disposed between the connection end 6B and the terminal on the high potential side of the switching element 54. Instead of the shunt resistors 55a and 55b, the on-resistance of the MOFFETs may be used to achieve a configuration in which the current is detected with the voltage generated across the on-resistance.

FIG. 7 is a block diagram illustrating a functional part that generates PWM signals among the functional parts of the control unit 25 illustrated in FIG. 1.

In FIG. 7, the carrier comparison unit 38 receives input of a lead angle phase θᵥ under lead angle control and a reference phase θₑ, which are used for generating the voltage command Vₘ as described later. The reference phase θₑ is a phase obtained by converting a rotor mechanical angle θₘ, i.e. an angle from the reference position of the rotor 12a, into an electric angle. Note that, as described above, the motor driving apparatus 2 according to the present embodiment has what is called a position sensorless drive configuration, in which position sensor signals from a position sensor are not used. Thus, the rotor mechanical angle θₘ and the reference phase θₑ are estimated by computation. The "lead angle phase" as used herein represents the "lead angle" of the voltage command in phase. Further, the "lead angle" as used herein is the phase difference between the motor-applied voltage applied to the winding 12f of the stator 12b and the motor-induced voltage induced in the winding 12f of the stator 12b. Note that the "lead angle" takes a positive value when the motor applied voltage has its phase leading a phase of the motor induced voltage.

In addition to the lead angle phase θᵥ and the reference phase θₑ, the carrier comparison unit 38 receives input of the carrier generated by the carrier generation unit 33, the direct-current voltage V_{dc}, and the voltage amplitude command V*. The voltage amplitude command V* is the amplitude value of the voltage command Vₘ. The carrier comparison unit 38 generates the PWM signals Q1 to Q4 on the basis of the carrier, the lead angle phase θᵥ, the reference phase θₑ, the direct-current voltage V_{dc}, and the voltage amplitude command V*.

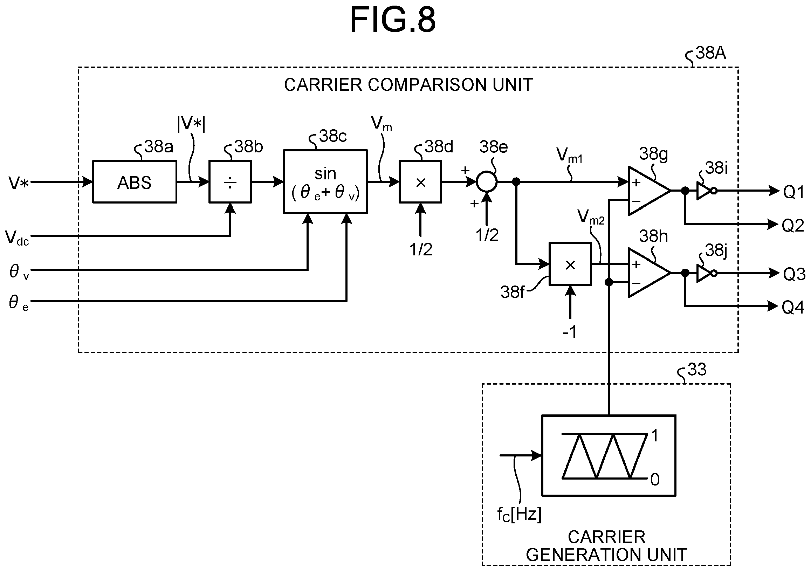

FIG. 8 is a block diagram illustrating an example of the carrier comparison unit 38 illustrated in FIG. 7. FIG. 8 depicts the detailed configuration of the carrier comparison unit 38A and the carrier generation unit 33.

In FIG. 8, a carrier frequency f_{c} [Hz], which is the frequency of the carrier, is set in the carrier generation unit 33. As indicated by the arrow of the carrier frequency f_{c}, a triangular wave carrier that moves up and down between "0" and "1" is illustrated as an example of the carrier waveform. The PWM control of the inverter 11 includes synchronous PWM control and asynchronous PWM control. In the case of synchronous PWM control, it is necessary to synchronize the carrier with the lead angle phase θᵥ. On the other hand, in the case of asynchronous PWM control, it is not necessary to synchronize the carrier with the lead angle phase θᵥ.

As illustrated in FIG. 8, the carrier comparison unit 38A includes an absolute value computation unit 38a, a division unit 38b, a multiplication unit 38c, a multiplication unit 38d, a multiplication unit 38f, an addition unit 38e, a comparison unit 38g, a comparison unit 38h, an output inversion unit 38i, and an output inversion unit 38j.

The absolute value computation unit 38a computes an absolute value |V*| of the voltage amplitude command V*. The division unit 38b divides the absolute value |V*| by the direct-current voltage V_{dc} detected by the voltage sensor 20. In the configuration of FIG. 8, the output of the division unit 38b is used as the modulation factor. Battery voltage, which is the output voltage of the battery 10, fluctuates due to a continuous flow of current. However, dividing the absolute value |V*| by the direct-current voltage V_{dc} enables the value of the modulation factor to be adjusted so that the motor applied voltage does not decrease due to a decrease in battery voltage.

The multiplication unit 38c computes the sine value of "θₑ+θᵥ", i.e. the reference phase θₑ plus the lead angle phase θᵥ. The computed sine value of "θₑ+θᵥ" is multiplied by the modulation factor that is the output of the division unit 38b. The multiplication unit 38d multiplies the voltage command Vₘ, which is the output of the multiplication unit 38c, by "1/2". The addition unit 38e adds "1/2" to the output of the multiplication unit 38d. The multiplication unit 38f multiplies the output of the addition unit 38e by "-1". Also, the output of the addition unit 38e is input to the comparison unit 38g as a positive voltage command Vₘ₁ for driving the two switching elements 51 and 53 of the upper arm among the plurality of switching elements 51 to 54. The output of the multiplication unit 38f is input to the comparison unit 38h as a negative voltage command Vₘ₂ for driving the two switching elements 52 and 54 of the lower arm.

The comparison unit 38g compares the positive voltage command Vₘ₁ with the amplitude of the carrier. The output of the output inversion unit 38i, which is the inverted output of the comparison unit 38g, serves as the PWM signal Q1 for the switching element 51, and the output of the comparison unit 38g serves as the PWM signal Q2 for the switching element 52. Similarly, the comparison unit 38h compares the negative voltage command Vₘ₂ with the amplitude of the carrier. The output of the output inversion unit 38j, which is the inverted output of the comparison unit 38h, serves as the PWM signal Q3 for the switching element 53, and the output of the comparison unit 38h serves as the PWM signal Q4 for the switching element 54. The output inversion unit 38i ensures that the switching element 51 and the switching element 52 are not on at the same time, and the output inversion unit 38j ensures that the switching element 53 and the switching element 54 are not on at the same time.

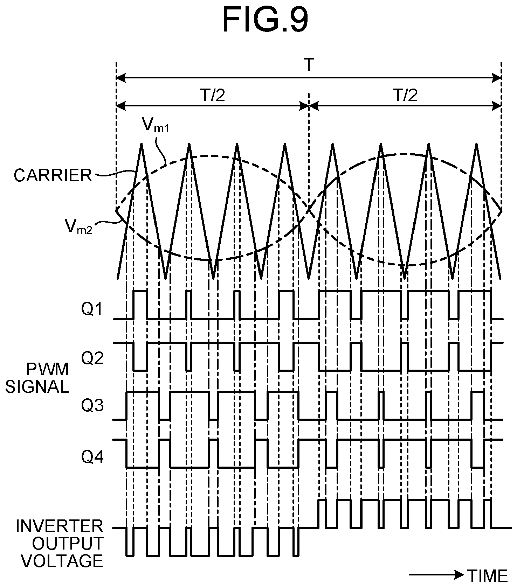

FIG. 9 is a time chart illustrating examples of the main waveforms in the case that the carrier comparison unit 38A illustrated in FIG. 8 is used for operation. FIG. 9 depicts the waveform of the positive voltage command Vₘ₁ output from the addition unit 38e, the waveform of the negative voltage command Vₘ₂ output from the multiplication unit 38f, the waveforms of the PWM signals Q1 to Q4, and the waveform of the inverter output voltage.

The PWM signal Q1 is "Low" when the positive voltage command Vₘ₁ is larger than the carrier, and "High" when the positive voltage command Vₘ₁ is smaller than the carrier. The PWM signal Q2 is the inverted signal of the PWM signal Q1. The PWM signal Q3 is "Low" when the negative voltage command Vₘ₂ is larger than the carrier, and "High" when the negative voltage command Vₘ₂ is smaller than the carrier. The PWM signal Q4 is the inverted signal of the PWM signal Q3. In this way, the circuit illustrated in FIG. 8 is configured as "Low Active", but may be configured as "High Active", in which each signal has the opposite value.

As illustrated in FIG. 9, the waveform of the inverter output voltage contains voltage pulses due to the difference voltage between the PWM signal Q1 and the PWM signal Q4 and voltage pulses due to the difference voltage between the PWM signal Q3 and the PWM signal Q2. These voltage pulses are applied to the single-phase motor 12 as the motor applied voltage.

Known modulation methods used in generating the PWM signals Q1 to Q4 include bipolar modulation and unipolar modulation. Bipolar modulation is a modulation method for outputting voltage pulses that switch to a positive or negative potential for each period of the voltage command Vₘ. Unipolar modulation is a modulation method for outputting voltage pulses that switch between three potentials for each period of the voltage command Vₘ, that is, voltage pulses that switch between a positive potential, a negative potential, and zero potential. The waveforms illustrated in FIG. 9 are produced by unipolar modulation. The motor driving apparatus 2 according to the present embodiment may use either modulation method. In applications that requires control for providing the motor current waveform closer to a sinusoidal wave, it is preferable to employ unipolar modulation, which has a lower harmonic content than bipolar modulation.

The waveforms illustrated in FIG. 9 are obtained with a method in which the four switching elements of the switching elements 51 and 52 constituting the leg 5A and the switching elements 53 and 54 constituting the leg 5B are subjected to switching operation during the time period of a half period T/2 of the voltage command Vₘ. This method is called "two-sided PWM" because switching operation is performed with both the positive voltage command Vₘ₁ and the negative voltage command Vₘ₂. There is another method called "one-sided PWM" in contrast to the "two-sided PWM". For the "one-sided PWM", the switching operation of the switching elements 51 and 52 is suspended in one half of one period T of the voltage command Vₘ, and the switching operation of the switching elements 53 and 54 is suspended in the other half of the one period T of the voltage command Vₘ. The "one-sided PWM" will be described hereinafter. In the following description, the operation mode in which two-sided PWM is used for operation is referred to as "two-sided PWM mode", and the operation mode in which one-sided PWM is used for operation is referred to as "one-sided PWM mode".

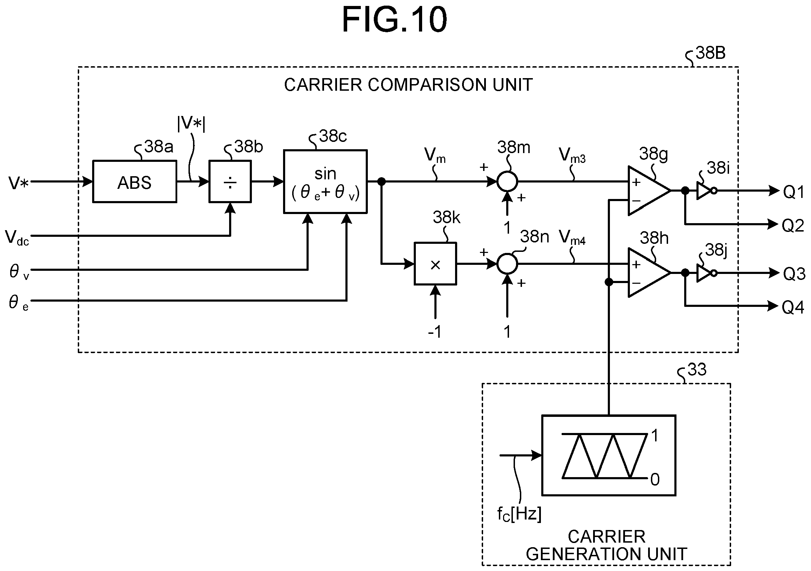

FIG. 10 is a block diagram illustrating another example of the carrier comparison unit 38 illustrated in FIG. 7. FIG. 10 depicts an example of a circuit generating PWM signals by the above-mentioned "one-sided PWM". Specifically, FIG. 10 depicts the detailed configuration of a carrier comparison unit 38B and the carrier generation unit 33. Note that the configuration of the carrier generation unit 33 illustrated in FIG. 10 is the same as or equivalent to that illustrated in FIG. 8. Components in the configuration of the carrier comparison unit 38B illustrated in FIG. 10 that are the same as or equivalent to those of the carrier comparison unit 38A illustrated in FIG. 8 are denoted by the same reference signs.

As illustrated in FIG. 10, the carrier comparison unit 38B includes the absolute value computation unit 38a, the division unit 38b, the multiplication unit 38c, a multiplication unit 38k, an addition unit 38m, an addition unit 38n, the comparison unit 38g, the comparison unit 38h, the output inversion unit 38i, and the output inversion unit 38j.

The absolute value computation unit 38a computes the absolute value |V*| of the voltage amplitude command V*. The division unit 38b divides the absolute value |V*| by the direct-current voltage V_{dc} detected by the voltage sensor 20. The output of the division unit 38b is used as the modulation factor also in the configuration of FIG. 10.

The multiplication unit 38c computes the sine value of "θₑ+θᵥ", i.e. the reference phase θₑ plus the lead angle phase θᵥ. The computed sine value of "θₑ+θᵥ" is multiplied by the modulation factor that is the output of the division unit 38b. The multiplication unit 38k multiplies the voltage command Vₘ, which is the output of the multiplication unit 38c, by "-1". The addition unit 38m adds "1" to the voltage command Vₘ that is the output of the multiplication unit 38c. The addition unit 38n adds "1" to the output of the multiplication unit 38k, that is, the inverted output of the voltage command Vₘ. The output of the addition unit 38m is input to the comparison unit 38g as a first voltage command Vₘ₃ for driving the two switching elements 51 and 53 of the upper arm among the plurality of switching elements 51 to 54. The output of the addition unit 38n is input to the comparison unit 38h as a second voltage command Vₘ₄ for driving the two switching elements 52 and 54 of the lower arm.

The comparison unit 38g compares the first voltage command Vₘ₃ with the amplitude of the carrier. The output of the output inversion unit 38i, which is the inverted output of the comparison unit 38g, serves as the PWM signal Q1 for the switching element 51, and the output of the comparison unit 38g serves as the PWM signal Q2 for the switching element 52. Similarly, the comparison unit 38h compares the second voltage command Vₘ₄ with the amplitude of the carrier. The output of the output inversion unit 38j, which is the inverted output of the comparison unit 38h, serves as the PWM signal Q3 for the switching element 53, and the output of the comparison unit 38h serves as the PWM signal Q4 for the switching element 54. The output inversion unit 38i ensures that the switching element 51 and the switching element 52 are not on at the same time, and the output inversion unit 38j ensures that the switching element 53 and the switching element 54 are not on at the same time.

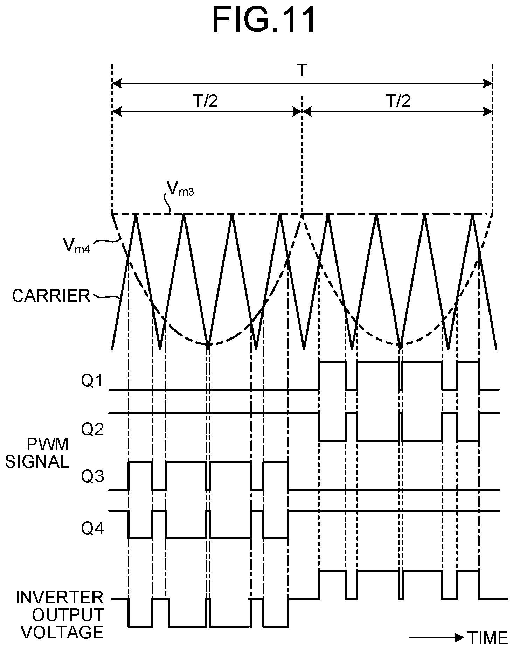

FIG. 11 is a time chart illustrating examples of the main waveforms in the case that the carrier comparison unit 38B illustrated in FIG. 10 is used for operation.

FIG. 11 depicts the waveform of the first voltage command Vₘ₃ output from the addition unit 38m, the waveform of the second voltage command Vₘ₄ output from the addition unit 38n, the waveforms of the PWM signals Q1 to Q4, and the waveform of the inverter output voltage. In FIG. 11, for convenience, the waveform portion of the first voltage command Vₘ₃ having amplitude values larger than the peak value of the carrier and the waveform portion of the second voltage command Vₘ₄ having amplitude values larger than the peak value of the carrier are represented by flat straight lines.

The PWM signal Q1 is "Low" when the first voltage command Vₘ₃ is larger than the carrier, and "High" when the first voltage command Vₘ₃ is smaller than the carrier. The PWM signal Q2 is the inverted signal of the PWM signal Q1. The PWM signal Q3 is "Low" when the second voltage command Vₘ₄ is larger than the carrier, and "High" when the second voltage command Vₘ₄ is smaller than the carrier. The PWM signal Q4 is the inverted signal of the PWM signal Q3. In this way, the circuit illustrated in FIG. 10 is configured as "Low Active", but may be configured as "High Active", in which each signal has the opposite value.

As illustrated in FIG. 11, the waveform of the inverter output voltage contains voltage pulses due to the difference voltage between the PWM signal Q1 and the PWM signal Q4 and voltage pulses due to the difference voltage between the PWM signal Q3 and the PWM signal Q2. These voltage pulses are applied to the single-phase motor 12 as the motor applied voltage.

The waveforms illustrated in FIG. 11 show that the switching operation of the switching elements 51 and 52 is suspended in one half of the one period T of the voltage command Vₘ, and the switching operation of the switching elements 53 and 54 is suspended in the other half of the one period T of the voltage command Vₘ.

The waveforms illustrated in FIG. 11 also show that the switching element 52 is controlled such that the switching element 52 is always in an on state in one half of the one period T of the voltage command Vₘ, and the switching element 54 is controlled such that the switching element 54 is always in an on state in the other half of the one period T of the voltage command Vₘ. Note that FIG. 11 is an example, and it is also possible that the switching element 51 is controlled such that the switching element 51 is always in an on state in one half of the period, and the switching element 53 is controlled such that the switching element 53 is always in an on state in the other half of the period. That is, the waveforms illustrated in FIG. 11 are characterized in that at least one of the switching elements 51 to 54 is controlled such that the at least one switching element is in an on state in half a period of the voltage command Vₘ.

In FIG. 11, the waveform of the inverter output voltage is a result of unipolar modulation, in which the waveform switches between three potentials for each period of the voltage command Vₘ. As described above, bipolar modulation may be used instead of unipolar modulation, but it is preferable to employ unipolar modulation in applications that require control for providing the motor current waveform closer to a sinusoidal wave.

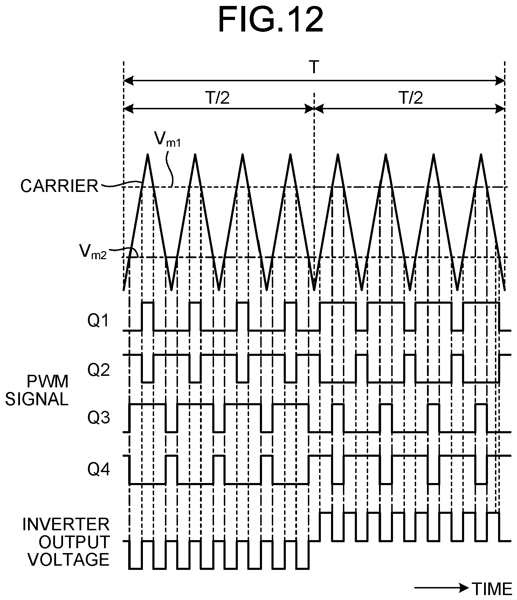

FIG. 12 is a time chart, different from that in FIG. 9, illustrating examples of the main waveforms in the case that the carrier comparison unit 38A illustrated in FIG. 8 is used for operation. In contrast to FIG. 9, in which the positive voltage command Vₘ₁ and the negative voltage command Vₘ₂ have sinusoidal waves, FIG. 12 depicts the case where the positive voltage command Vₘ₁ and the negative voltage command Vₘ₂ have fixed values, that is, the case where the voltage command Vₘ is a direct current. Hereinafter, to drive the single-phase motor 12 based on the direct-current voltage command Vₘ is referred to as "direct-current excitation". In direct-current excitation, in a case where the direct-current voltage command Vₘ has a constant value for each time period of a half period T/2 of the voltage command Vₘ, a pulse width is equal, that is, a fixed-width voltage pulse train is obtained in each of the PWM signals Q1 to Q4. In addition, it is also possible to generate the PWM signals Q1 to Q4 for direct-current excitation by using the carrier comparison unit 38B illustrated in FIG. 10. Specifically, in the case of the carrier comparison unit 38B illustrated in FIG. 10, for example, the value of "θₑ+θᵥ" that is input to the multiplication unit 38c is set to n/2, and the value of the coefficient "1" that is added in the addition unit 38m and the value of the coefficient "1" that is added in the addition unit 38n are adjusted as appropriate, whereby the waveforms of the PWM signals Q1 to Q4 for direct-current excitation can be obtained.

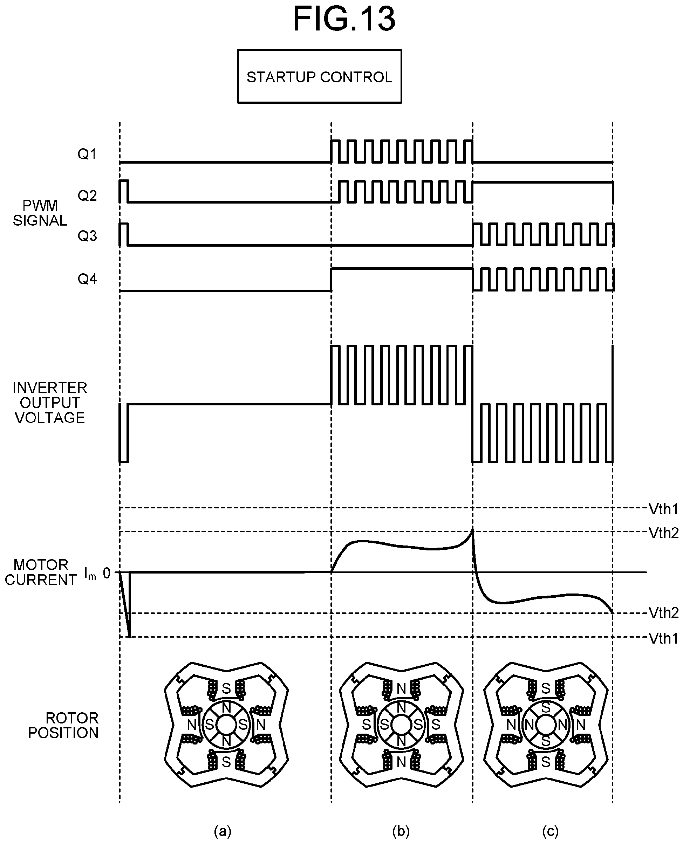

Next, startup control which is the main control according to the present embodiment will be described. FIG. 13 is a first diagram for explaining startup control according to the embodiment. FIG. 13 depicts the waveforms of the PWM signals Q1 to Q4, the waveform of the inverter output voltage, the waveform of the motor current Iₘ, and the rotor position. Note that the operation waveforms described below are examples in the case that the carrier comparison unit 38B illustrated in FIG. 10 is used for operation.

First, the winding 12f is subjected to direct-current excitation so that the single-phase motor 12 is activated. In the example of FIG. 13, as illustrated in the upper part of (a), the switching elements 52 and 53 are turned on by the PWM signals Q2 and Q3 which are pulse voltages. Here, suppose that the rotor position is the magnetic pole position illustrated in the lower part of (a). In this case, the magnetic poles generated in the winding 12f and the magnetic poles of the rotor 12a have different polarities, and an attractive force is generated between the winding 12f and the rotor 12a. Because the rotor 12a is stationary, no speed electromotive force is generated. Therefore, a current that depends only on the winding resistance flows through the rotor 12a. Thus, the motor current Iₘ that rises steeply is generated as illustrated in the middle part of (a). The control unit 25 turns off all the PWM signals Q1 to Q4 in order to cut off this current. Specifically, in response to the motor current Iₘ exceeding a first threshold Vth1, the control unit 25 performs control to turn off the PWM signals Q1 to Q4 and make the inverter output voltage zero. As a result, the application of the inverter output voltage to the single-phase motor 12 is stopped. In addition, this control enables the winding 12f to be protected from overcurrent.

The magnetic pole position of the rotor 12a is identified through the above direct-current excitation. Therefore, the control unit 25 performs direct-current excitation on the winding 12f based on the PWM signals having the opposite polarity to the above. In the example of FIG. 13, as illustrated in the upper part of (b), after the switching elements 51 and 54 are turned on by the PWM signals Q1 and Q4, the switching elements 51 to 54 are driven using the PWM signals Q1 to Q4 which are voltage pulse trains having a pulsed shape based on the one-sided PWM illustrated in FIG. 11. Then, when the motor current Iₘ grows and the motor current Iₘ exceeds a second threshold Vth2 smaller than the first threshold Vth1, the excitation direction is reversed. After that, each time the motor current Iₘ exceeds the second threshold Vth2, the excitation direction is reversed. With the above control, the rotor position alternately repeats the states of the magnetic poles illustrated in the lower parts of (b) and (c). This makes it possible to activate the single-phase motor 12 stably even in the case of position sensorless startup of the single-phase motor 12.

Although the example of FIG. 13 represents the case where the motor current Iₘ exceeds the first threshold Vth1 in one pulse caused by the PWM signals Q2 and Q3, the motor current Iₘ may not reach the first threshold Vth1 in one pulse. In that case, a plurality of pulses are applied, and the PWM signals Q1 to Q4 are controlled to be off when the motor current Iₘ exceeds the first threshold Vth1.

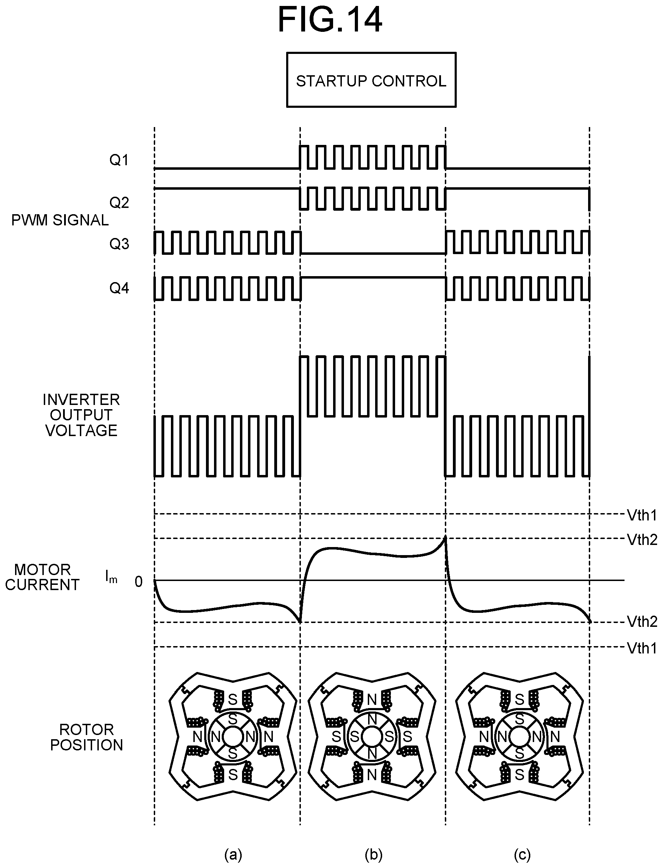

FIG. 14 is a second diagram for explaining startup control according to the embodiment. In FIG. 14, the difference from FIG. 13 is that the magnetic pole polarity of the rotor 12a is opposite to that in FIG. 13, as indicated by the rotor positions in FIGS. 13(a) and 14(a). Thus, in FIG. 14, the negative motor current Iₘ increases gradually. Therefore, by comparing the motor current Iₘ with the first threshold Vth1, it is possible to uniquely identify the magnetic pole at the stop position of the rotor 12a.

By continuously outputting the PWM signals Q1 to Q4, the motor current Iₘ grows gradually. Therefore, as in the case of FIG. 13, the excitation direction is reversed when the motor current Iₘ exceeds the second threshold Vth2. Subsequent operations are similar to those in FIG. 13.

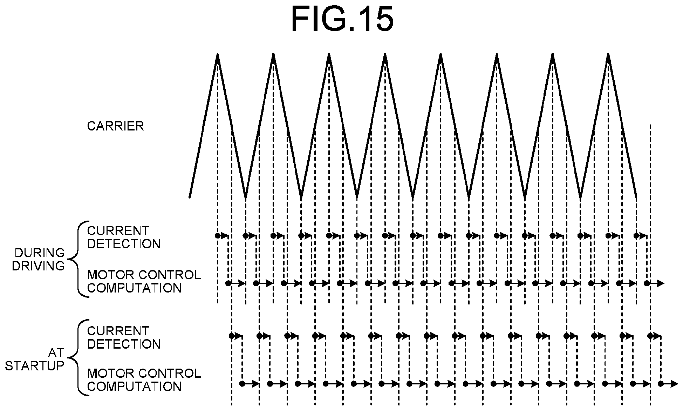

FIG. 15 is a time chart for explaining current detection timings according to the embodiment. In FIG. 15, the upper part depicts the waveform of the carrier. The middle part depicts the timings of current detection and motor control computation during driving, and the lower part depicts the timings of current detection and motor control computation at startup. Note that FIG. 15 illustrates an exemplary case where one current detection and one motor control computation are performed every half period of the carrier.

As illustrated in the middle part of FIG. 15, the current is detected at the peaks and troughs of the carrier during driving. The motor current Iₘ is an alternating current, and the obtained current values vary depending on the detection timing. Therefore, a preferable embodiment for driving is to detect the current at the peaks and troughs of the carrier in order to detect average current values of the motor current Iₘ.

On the other hand, at startup, current detection timing is considered from the viewpoint of motor protection. At the time of a peak and a trough of the carrier, the motor current Iₘ is in the process of growing, and continues growing until an intermediate position between the peak and the trough of the carrier. Therefore, startup current detection is performed at a timing different from that of driving current detection, specifically, at an intermediate position between the peak and the trough of the carrier. This makes it possible to quickly detect an overcurrent that may occur in the case that the magnetic poles generated in the winding 12f and the magnetic poles of the rotor 12a have different polarities, as illustrated in FIG. 13. In addition, overcurrent detection can be implemented without using the processor 31 and the analog-to-digital converter 30 which are of high performance.

As described above, in the motor driving apparatus according to the embodiment, when an output voltage of the inverter is applied to the single-phase motor so as to activate the single-phase motor, if an absolute value of a current flowing in the inverter or the single-phase motor exceeds a first threshold, application of the output voltage is stopped and thereafter a polarity of the output voltage is reversed. This makes it possible to activate the single-phase motor stably even in the case of position sensorless startup of the single-phase motor.

In addition, in the motor driving apparatus according to the embodiment, if the absolute value of the current flowing in the inverter or the single-phase motor does not exceed the first threshold, the polarity of the output voltage is reversed in response to an elapsed time from the application of the output voltage to the single-phase motor exceeding a first time and the absolute value of the current flowing in the inverter or the single-phase motor exceeding a second threshold smaller than the first threshold. The first time as used herein is a time longer than the time in which the motor current exceeds the first threshold in FIG. 13 and shorter than the time in which the motor current exceeds the second threshold in FIG. 14. This makes it possible to activate the single-phase motor stably even in the case of position sensorless startup of the single-phase motor.

Note that the above-described control may be performed immediately after the single-phase motor is stopped, not immediately before the single-phase motor is activated. Specifically, when the single-phase motor is stopped, an output voltage of the inverter is applied to the single-phase motor, and application of the output voltage is stopped once an absolute value of a current flowing in the inverter or the single-phase motor exceeds a first threshold. Alternatively, if the absolute value of the current flowing in the inverter or the single-phase motor does not exceed the first threshold, the application of the output voltage is stopped once an elapsed time from the application of the output voltage to the single-phase motor exceeds a first time and the absolute value of the current flowing in the inverter or the single-phase motor exceeds a second threshold smaller than the first threshold. These controls can be suitably used especially for a single-phase motor that has a product structure in which rotation due to shaft external force is unlikely to occur while the single-phase motor is stopped. For a single-phase motor that has such a product structure, by performing the above-described stop control immediately after the single-phase motor is stopped, it is possible to achieve the remarkable effect that the startup time at the next startup can be shortened.

Next, examples of application of the motor driving apparatus according to the embodiment will be described. The motor driving apparatus described above can be used, for example, in a vacuum cleaner. In the case of a product such as a vacuum cleaner that is used immediately after the power is turned on, the effect of shortening the startup time achieved by the motor driving apparatus according to the embodiment is increased.

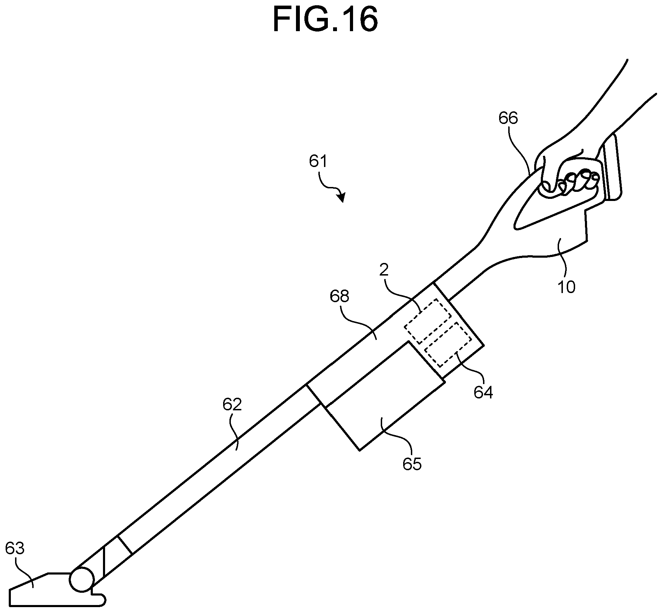

FIG. 16 is a diagram illustrating the configuration of a vacuum cleaner 61 including the motor driving apparatus 2 according to the embodiment. The vacuum cleaner 61 illustrated in FIG. 16 is what is called a stick-type vacuum cleaner. In FIG. 16, the vacuum cleaner 61 includes the battery 10 illustrated in FIG. 1, the motor driving apparatus 2 illustrated in FIG. 1, an electric blower 64 that is driven by the single-phase motor 12 illustrated in FIG. 1, a dust collection chamber 65, a sensor 68, a suction port 63, an extension pipe 62, and an operation unit 66.

A user who uses the vacuum cleaner 61 holds the operation unit 66 to operate the vacuum cleaner 61. The motor driving apparatus 2 of the vacuum cleaner 61 drives the electric blower 64 using the battery 10 as a power supply. As the electric blower 64 is driven, dust is sucked through the suction port 63. The sucked dust is collected in the dust collection chamber 65 via the extension pipe 62.

Although FIG. 16 depicts a stick-type vacuum cleaner as an example, the present invention is not limited to a stick-type vacuum cleaner. The present invention can be applied to any product that is an electrical device equipped with an electric blower.

Although FIG. 16 depicts a configuration in which the battery 10 is used as a power supply, the present invention is not limited to this. Instead of the battery 10, an alternating-current power supply supplied from an outlet may be used.

Next, another example of application of the motor driving apparatus according to the embodiment will be described. The motor driving apparatus described above can be used, for example, in a hand dryer. In the case of a hand dryer, the shorter the time from inserting a hand to driving the electric blower, the better the user's usability. Therefore, the effect of shortening the startup time achieved by the motor driving apparatus according to the embodiment is greatly exhibited.

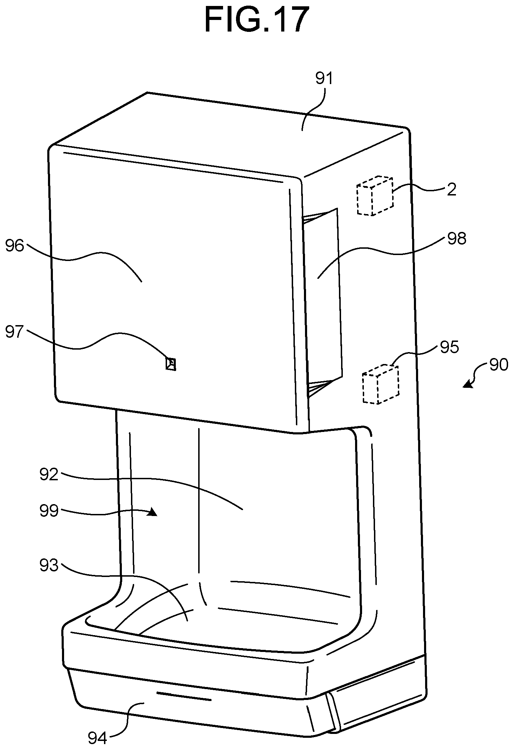

FIG. 17 is a diagram illustrating the configuration of a hand dryer 90 including the motor driving apparatus 2 according to the embodiment. In FIG. 17, the hand dryer 90 includes the motor driving apparatus 2 illustrated in FIG. 1, a casing 91, a hand detection sensor 92, a water tray 93, a drain container 94, a cover 96, a sensor 97, an intake port 98, and an electric blower 95 that is driven by the single-phase motor 12 illustrated in FIG. 1. Here, the sensor 97 is either a gyro sensor or a motion sensor. In the hand dryer 90, a hand is inserted into a hand insertion portion 99 above the water tray 93, and the water is blown off by air from the electric blower 95. The blown water is collected in the water tray 93, and thereafter stored in the drain container 94.

Because the vacuum cleaner 61 and the hand dryer 90 described above are both position sensorless products including the motor driving apparatus 2 according to the embodiment, the following effects can be obtained.

First, in the case of the position sensorless configuration, because startup can be performed without a position sensor, it is possible to reduce costs such as the material cost and the processing cost of the position sensor. In addition, because there is no position sensor, it is possible to eliminate the influence of position sensor misalignment on performance. Thus, stable performance can be ensured.

In addition, because a position sensor is a sensitive sensor, high mounting accuracy is required regarding the installation position of the position sensor. In addition, after mounting, it is necessary to make adjustments according to the mounting position of the position sensor. On the other hand, in the case of the position sensorless configuration, the position sensor itself is unnecessary, and it is possible to eliminate the step for position sensor adjustment. As a result, the manufacturing cost can be significantly reduced. Moreover, because there is no influence of position sensor aging, the quality of the product can be improved.

In addition, in the case of the position sensorless configuration, because no position sensor is required, the inverter and the single-phase motor can be configured separately. This makes it possible to relax restrictions on the product. For example, in the case of a product that is used in a water place with a large amount of water, the installation position of the inverter in the product can be some point far from the water place. As a result, the probability of failure of the inverter can be reduced, and accordingly the reliability of the device can be improved.

Moreover, in the case of the position sensorless configuration, it is possible to detect motor anomalies such as shaft lock and open phase by detecting the motor current or the inverter current with the current detector disposed instead of a position sensor. Therefore, the product can be safely stopped without a position sensor.

As described above, the present embodiment has provided the exemplary configurations in which the motor driving apparatus is applied to a vacuum cleaner and a hand dryer, but the present invention is not limited to these examples. The motor driving apparatus 2 can be applied to a wide variety of electrical devices equipped with a motor. Examples of electrical devices equipped with a motor include incinerators, crushers, drying machines, dust collectors, printing machines, cleaning machines, confectionery machines, tea making machines, woodworking machines, plastic extruders, cardboard machines, packaging machines, hot air generators, OA equipment, and electric blowers. An electric blower is a blower means for object transportation, dust attraction, or general-purpose blowing and exhausting.

### Reference Signs List

1 motor driving system; 2 motor driving apparatus; 5A, 5B leg; 6A, 6B connection end; 10 battery; 11, 11A inverter; 12 single-phase motor; 12a rotor; 12b stator; 12c shaft; 12d divided core; 12e teeth; 12e1 first end portion; 12e2 second end portion; 12f winding; 16a, 16b direct-current bus; 20 voltage sensor; 22 current sensor; 25 control unit; 30 analog-to-digital converter; 30a digital output value; 31 processor; 32 drive signal generation unit; 33 carrier generation unit; 34 memory; 38, 38A, 38B carrier comparison unit; 38a absolute value computation unit; 38b division unit; 38c, 38d, 38f, 38k multiplication unit; 38e, 38m, 38n addition unit; 38g, 38h comparison unit; 38i, 38j output inversion unit; 51, 52, 53, 54 switching element; 51a, 52a, 53a, 54a body diode; 55a, 55b shunt resistor; 61 vacuum cleaner; 62 extension pipe; 63 suction port; 64, 95 electric blower; 65 dust collection chamber; 66 operation unit; 68, 97 sensor; 90 hand dryer; 91 casing; 92 hand detection sensor; 93 water tray; 94 drain container; 96 cover; 98 intake port; 99 hand insertion portion.

## Claims

1. A motor driving apparatus (2) for driving a single-phase motor (12), the single-phase motor (12) comprising asymmetric teeth (12e), the motor driving apparatus (2) comprising:
an inverter (11) supplying alternating-current power to the single-phase motor (12), wherein
when an output voltage of the inverter (11) is applied to the single-phase motor (12) so as to activate the single-phase motor (12), if an absolute value of a current flowing in the inverter (11) or the single-phase motor (12) exceeds a first threshold (Vth1), application of the output voltage is stopped and thereafter a polarity of the output voltage is reversed, **characterized in that**
if the absolute value of the current does not exceed the first threshold (Vth1), the polarity of the output voltage is reversed in response to an elapsed time from the application of the output voltage to the single-phase motor (12) exceeding a first time and the absolute value of the current exceeding a second threshold (Vth2) smaller than the first threshold (Vth1).

2. The motor driving apparatus (2) according to claim 1, wherein
when the single-phase motor (12) is activated, the inverter (11) applies a pulsed voltage to the single-phase motor (12).

3. The motor driving apparatus (2) according to claim 2, wherein
a plurality of the pulsed voltages are fixed-width voltage pulse trains.

4. The motor driving apparatus (2) according to claim 2 or 3, wherein
the pulsed voltage is generated based on a carrier and a voltage command.

5. The motor driving apparatus (2) according to claim 4, wherein
at startup of the single-phase motor (12), the current is detected at an intermediate point between a peak and a trough of the carrier, and
during driving of the single-phase motor (12), the current is detected at at least one of a peak and a trough of the carrier.

6. The motor driving apparatus (2) according to any one of claims 1 to 5, wherein
the inverter (11) includes a plurality of switching elements (51 to 54) that are bridge-connected, and
at least one of the plurality of switching elements (51 to 54) is formed of a wide bandgap semiconductor.

7. The motor driving apparatus (2) according to claim 6, wherein
the wide bandgap semiconductor is silicon carbide, gallium nitride, gallium oxide, or diamond.

8. An electric blower (64; 95) comprising the motor driving apparatus (2) according to any one of claims 1 to 7.

9. A vacuum cleaner (61) comprising the electric blower (64) according to claim 8.

10. A hand dryer (90) comprising the electric blower (95) according to claim 8.

## Patentansprüche

1. Motorantriebsvorrichtung (2) zum Antreiben eines Einphasenmotors (12), wobei der Einphasenmotor (12) asymmetrische Zähne (12e) umfasst, wobei die Motorantriebsvorrichtung (2) Folgendes umfasst:
einen Wechselrichter (11), der dem Einphasenmotor (12) Wechselstromleistung zuführt, wobei,
wenn eine Ausgangsspannung des Wechselrichters (11) an den Einphasenmotor (12) angelegt wird, um den Einphasenmotor (12) zu aktivieren, falls ein Absolutwert eines im Wechselrichter (11) oder im Einphasenmotor (12) fließenden Stroms einen ersten Schwellwert (Vth1) übersteigt, das Anlegen der Ausgangsspannung angehalten wird und anschließend die Polarität der Ausgangsspannung umgekehrt wird, **dadurch gekennzeichnet, dass**
falls der Absolutwert des Stroms den ersten Schwellwert (Vth1) nicht übersteigt, die Polarität der Ausgangsspannung als Reaktion darauf umgekehrt wird, dass eine nach dem Anlegen der Ausgangsspannung an den Einphasenmotor (12) verstrichene Zeitspanne eine erste Zeitspanne übersteigt und der Absolutwert des Stroms einen zweiten Schwellwert (Vth2) übersteigt, der kleiner als der erste Schwellwert (Vth1) ist.

2. Motorantriebsvorrichtung (2) nach Anspruch 1, wobei, wenn der Einphasenmotor (12) aktiviert ist, der Wechselrichter (11) eine gepulste Spannung an den Einphasenmotor (12) anlegt.

3. Motorantriebsvorrichtung (2) nach Anspruch 2, wobei eine Vielzahl von Spannungspulsen Spannungspulsfolgen mit fester Breite sind.

4. Motorantriebsvorrichtung (2) nach Anspruch 2 oder 3, wobei die gepulste Spannung basierend auf einem Träger und einem Spannungsbefehl erzeugt wird.

5. Motorantriebsvorrichtung (2) nach Anspruch 4, wobei
beim Starten des Einphasenmotors (12) der Strom an einem Zwischenpunkt zwischen einem Spitzen- und einem Tiefstwert des Trägers detektiert wird, und
während des Antriebs des Einphasenmotors (12) der Strom an zumindest einem Höchst- und einem Tiefstwert des Trägers detektiert wird.

6. Motorantriebsvorrichtung (2) nach einem der Ansprüche 1 bis 5, wobei
der Wechselrichter (11) eine Vielzahl von Schaltelementen (51 bis 54) umfasst, die in Brückenschaltung geschaltet sind, und
zumindest eines aus der Vielzahl von Schaltelementen (51 bis 54) aus einem Halbleiter mit großer Bandlücke ausgebildet ist.

7. Motorantriebsvorrichtung (2) nach Anspruch 6, wobei
der Halbleiter mit großer Bandlücke aus Siliziumcarbid, Galliumnitrid, Galliumoxid oder Diamant ist.

8. Elektrisches Gebläse (64, 95), umfassend eine Motorantriebsvorrichtung (2) nach einem der Ansprüche 1 bis 7.

9. Staubsauger (61), umfassend ein elektrisches Gebläse (64) nach Anspruch 8.

10. Handtrockner (90), umfassend ein elektrisches Gebläse (95) nach Anspruch 8.

## Revendications

1. Appareil d'entraînement de moteur (2) pour entraîner un moteur monophasé (12), le moteur monophasé (12) comprenant des dents asymétriques (12e), l'appareil d'entraînement de moteur (2) comprenant :
un onduleur (11) fournissant une alimentation en courant alternatif au moteur monophasé (12), dans lequel
lorsqu'une tension de sortie de l'onduleur (11) est appliquée au moteur monophasé (12) de manière à activer le moteur monophasé (12), si une valeur absolue d'un courant circulant dans l'onduleur (11) ou dans le moteur monophasé (12) dépasse un premier seuil (Vth1), l'application de la tension de sortie est arrêtée et ensuite une polarité de la tension de sortie est inversée, **caractérisé en ce que**
si la valeur absolue du courant ne dépasse pas le premier seuil (Vth1), la polarité de la tension de sortie est inversée en réponse à un temps écoulé depuis l'application de la tension de sortie au moteur monophasé (12) dépassant un premier temps, et la valeur absolue du courant dépassant un second seuil (Vth2) inférieur au premier seuil (Vth1).

2. Appareil d'entraînement de moteur (2) selon la revendication 1, dans lequel
lorsque le moteur monophasé (12) est activé, l'onduleur (11) applique une tension pulsée au moteur monophasé (12).

3. Appareil d'entraînement de moteur (2) selon la revendication 2, dans lequel
une pluralité des tensions pulsées sont des trains d'impulsions de tension de largeur fixe.

4. Appareil d'entraînement de moteur (2) selon la revendication 2 ou 3, dans lequel
la tension pulsée est générée sur la base d'une porteuse et d'une instruction de tension.

5. Appareil d'entraînement de moteur (2) selon la revendication 4, dans lequel
au démarrage du moteur monophasé (12), le courant est détecté en un point intermédiaire entre une crête et un creux de la porteuse, et
pendant l'entraînement du moteur monophasé (12), le courant est détecté au niveau d'au moins un parmi une crête et un creux de la porteuse.

6. Appareil d'entraînement de moteur (2) selon l'une quelconque des revendications 1 à 5, dans lequel
l'onduleur (11) comprend une pluralité d'éléments de commutation (51 à 54) qui sont connectés en pont, et
au moins un de la pluralité d'éléments de commutation (51 à 54) est formé d'un semi-conducteur à large bande interdite.

7. Appareil d'entraînement de moteur (2) selon la revendication 6, dans lequel
le semi-conducteur à large bande interdite est du carbure de silicium, du nitrure de gallium, de l'oxyde de gallium ou du diamant.

8. Soufflante électrique (64 ;95) comprenant l'appareil d'entraînement de moteur (2) selon l'une quelconque des revendications 1 à 7.

9. Aspirateur (61) comprenant la soufflante électrique (64) selon la revendication 8.

10. Sèche-mains (90) comprenant la soufflante électrique (95) selon la revendication 8.
